## Europäisches Patentamt

## European Patent Office

## Office européen des brevets

(19)

(11) Veröffentlichungsnummer: **0 192 839**
**B1**

(12) **EUROPÄISCHE PATENTSCHRIFT**

(45) Veröffentlichungstag der Patentschrift:
20.09.89

(21) Anmeldenummer: **85115734.7**

(22) Anmeldetag: **10.12.85**

(51) Int. Cl.⁴: **B 60 B 17/00**, B 60 B   3/04,
B 60 B   5/02, B 29 D 15/00

(54) Scheibenrad, insbesondere für Schienenfahrzeuge und Verfahren zu dessen Herstellung.

(30) Priorität: **21.02.85 DE 3506007**

(43) Veröffentlichungstag der Anmeldung:
**03.09.86 Patentblatt 86/36**

(45) Bekanntmachung des Hinweises auf die Patenterteilung: **20.09.89 Patentblatt 89/38**

(84) Benannte Vertragsstaaten:
**AT BE CH FR GB IT LI SE**

(56) Entgegenhaltungen:
**DE—A— 3 119 500
DE—A— 3 345 555**

(73) Patentinhaber: **Messerschmitt-Bölkow-Blohm Gesellschaft mit beschränkter Haftung
Robert-Koch-Strasse
D-8012 Ottobrunn (DE)**

(72) Erfinder: **Wackerle, Peter
Oderweg 7
D-8012 Ottobrunn (DE)**
Erfinder: **Spiller, Hans-Dieter
Staiger Strasse 54
D-7959 Burgrieden (DE)**

EP 0 192 839 B1

**Beschreibung**

Die Erfindung bezieht sich auf ein Scheibenrad und ein Verfahren zu dessen Herstellung gemäß den Oberbegriffen der unabhängigen Patentansprüche.

Es ist bekannt, derartige Scheibenräder, z. B. Eisenbahnräder oder Zahnräder mit großem Durchemesser, aus einem Verbund von Metall und faserverstärkten Werkstoffen herzustellen ; vgl. z. B. die DE-A-31 19 500. Durch eine solche Verbundkonstruktion kann das Gewicht der Scheibenräder verringert werden. Durch die Strukturdämpfung der faserverstärkten Werkstoffe werden auch die während des Betriebes auftretenden Lärmbelästigungen reduziert. Außerdem können durch die verwendeten Werkstoffe die während des Betriebes auftretenden Kräfte auf das Scheibenrad in radialer, axialer und Umfangs-Richtung an die geforderten Festigkeits- und Steifigkeitseigenschaften angepaßt werden.

Die bei dem bekannten Scheibenrad verwendeten unterschiedlichen Werkstoffe, nämlich faserverstärkte Werkstoffe und Stahl, werden untereinander und miteinander z. B. durch Bolzen, Schrumpfen oder durch Klebung verbunden. Die Konstruktion dieses bekannten Scheibenrades kann gemäß der nicht vorveröffentlichten (Offenlegungstag : 27-06-85) Patentanmeldung DE-A-33 45 555 (& EP-A-0 149 026) der Anmelderin vereinfacht und verbessert werden. Dieses Scheibenrad besteht aus zwei Nabenhälften, die jeweils an ihren äußeren Rändern einen Umfangsflansch aufweisen, mit dem jeweils eine Deckscheibe in einer zweischnittigen Verbindung verklebt ist. Die Deckscheiben zu beiden Seiten des Rades sind in seitlichen umlaufenden Aussparungen des Laufkranzes eingeklebt. Zwischen Nabe und Laufkranz ist ein schubsteifer Schubübertragungskörper eingesetzt, der seinerseits mit den Deckscheiben verklebt ist. Ebenso ist eine Verklebung des Schubübertragungskörpers mit der Nabe und dem Laufkranz vorgesehen. Der Schubübertragungskörper hat z. B. Wabengestalt oder ist aus geschlossenzelligem Schaumstoff aufgebaut.

Bei dieser vorgeschlagenen Konstruktion sind nur wenige Einzelteile notwendig, außerdem sind alle Verbindungen zwischen den einzelnen Materialien Klebeverbindungen. Die Herstellungskosten derartiger Scheibenräder lassen sich damit weiter reduzieren. Die Anforderungen an solche Scheibenräder hinsichtlich Festigkeit, Stabilität und Laufruhe können praktisch optimal erfüllt werden.

Es bestehen allerdings Bedenken, daß bei Aufreißen einer Klebeverbindung die Stabilität des Scheibenrades empfindlich gestört würde, obwohl in zahlreichen Versuchen nachgewiesen wurde, daß die Wahrscheinlichkeit des Aufreißens einer Klebeverbindung sogar geringer ist als diejenige für das Auftreten von Schwachstellen bei herkömmlichen Scheibenrädern. Die Bewährung in der Praxis steht allerdings noch bevor.

Der Erfindung liegt die Aufgabe zugrunde, eine Konstruktion für ein Scheibenrad der in Rede stehenden Art anzugeben, die lediglich mit Klebeverbindungen realisiert werden kann, wobei das Scheibenrad auch dann noch betriebssicher sein soll, wenn eine oder mehrere Klebeverbindungen aufreißen. Weiterhin ist es Aufgabe der Erfindung, ein Herstellungsverfahren für ein derartiges Scheibenrad anzugeben.

Diese Aufgabe ist gemäß der Erfindung durch die in den kennzeichnenden Teilen der nebengeordneten Patentansprüche angegebenen Merkmale gelöst.

Demgemäß ist ein wesentliches Merkmal der Erfindung darin zu sehen, daß der Schubübertragungskörper als in sich steifer Z-Stegkörper ausgebildet und an der Nabe und am Laufkranz jeweils zwischen deren beiden äußeren Flanschen gehalten ist. Dieser derart zwischen Nabe und Laufkranz eingespannte Schubübertragungskörper ist mit der Nabe und dem Laufkranz verklebt, wird jedoch so ausgelegt, daß auch beim Aufreißen aller Klebestellen die Laufsicherheit des Scheibenrades noch gewährleistet ist. Auf einem Teststand wurden Versuche simuliert, bei denen zwischen Nabe bzw. Laufkranz und dem Schubübertragungskörper die sonst übliche Klebeverbindung nicht vorhanden war. Der Schubübertragungskörper war hierbei aus in sich steifen gleichgeformten schalenförmigen Segmenten zusammengesetzt, die jeweils mit ihren radial innen liegenden bzw. außen liegenden Seitenwänden an der Nabe bzw. dem Laufkranz im Bereich zwischen den dortigen Flanschen und mit ihren in Radialebenen des Scheibenrades liegenden Seitenwänden an jeweils zwei benachbarten Segmenten anlagen, wobei die Schlenböden jeweils aufeinanderfolgender Segmente auf entgegengesetzten Seiten des Rades angeordnet waren. Auch die aneinanderstoßenden Seitenwände benachbarter Segmente waren nicht miteinander verklebt. Außerdem waren die Deckscheiben fortgelassen. Bei diesen Testversuchen wurde demnach der in der Praxis wohl nie eintretende Fall simuliert, daß sämtliche Klebeverbindungen vollständig aufgerissen waren. Die in sich steifen Segmente wurden zwischen den Flanschen an Nabe und Laufkranz so fest gehalten, daß das Scheibenrad gefahrlos zum Stand gebracht werden konnte. Die Konstruktion des Scheibenrades kann somit als eigensicher bezeichnet werden, sofern selbstverständlich die Steifigkeit des Schubübertragungskörpers auf diesem Extremfall eingestellt ist. Bei Verwendung von Segmenten, deren Seitenwände in Radialebenen liegen, die die Radachse enthalten, war hierzu eine Wandstärke von etwa 6 mm erforderlich.

Besonders vorteilhaft ist die Verwendung jeweils einstükkiger Naben und Laufkränze. Damit der Schubübertragungskörper in den Bereich zwischen den Flanschen an Nabe und Laufkranz eingesetzt werden kann, wird die Verformbarkeit von nicht ausgehärteten faserverstärkten Werkstoffen ausgenutzt. Der noch nicht ausgehärtete Schubübertragungskörper wird unter Verformung zwischen die Flansche an Nabe und Laufkranz eingesetzt und anschließend mit Hilfe von an die endgültige Form des Schubübertragungskörpers vorgeformten, jedoch elastisch verformbaren Stempeln in die endgültige Form gepreßt. Die Flächen an der Nabe und dem Laufkranz, an denen der Schubübertragungskörper in der endgültigen Form anliegt, werden für eine Verklebung entsprechend vorbereitet. Dies kann z. B. mit einer auf die Nabe bzw. den Laufkranz aufgebrachten Klebefolie geschehen. Wensentlich wirtschaftlicher ist jedoch die Methode, diese Flächen an Nabe und Laufkranz so vorzubereiten, daß das Bindemittel des Schubübertragungskörpers bei der Verpressung direkt an Nabe und Laufkranz haftet. Hierzu ist es möglich, die Anlageflächen an Nabe und Laufkranz z. B. durch Sandstrahlen aufzurauhen und mit einem Bindemittel zu streichen, das mit dem Bindemittel des faserverstärkten Werkstoffes des Schubübertragungskörpers bei der Verpressung reagiert. Wird der Schubübertragungskörper aus einzelnen schalenförmigen Segmenten zusammengesetzt, so verkleben die Seitenwände aneinanderliegender Segmente bei der Verpressung. Eine Wärmebehandlung bzw. Temperung unterstützt diesen Vorgang. Das Tempern erfolgt z. B. bei einer Temperatur von 120 °C für eine Dauer von 30 Minuten. Während des Abkühlens, bei dem der Preßdruck auf den Schubübertragungskörper aufrechterhalten wird, härtet der Schubübertragungskörper aus, so daß schließlich eine feste Verbindung zwischen Schubübertragungskörper und Nabe sowie Laufkranz und auch zwischen Einzelteilen des Schubübertragungskörpers erzielt wird, letzteres, falls der Schubübertragungskörper aus mehreren Teilen, z. B. den erwähnten schalenförmigen Segmenten zusammengesetzt ist.

Nach der Aushärtung des Schubübertragungskörpers werden auf entgegengesetzten Seiten des Scheibenrades die Deckscheiben auf die Außenränder der Flansche an Nabe und Laufkranz und auf den Schubübertragungskörper an dessen den Deckscheiben zugewandten Stegen aufgeklebt, wobei die Flansche an Nabe und Laufkranz so geformt sind, daß sich an diesen Stellen eine zweischnittige Verbindung zwischen Deckscheiben, Flansch und Schubübertragungskörper ergibt.

Die Laufruhe des derart hergestellten Scheibenrades kann noch erhöht werden, wenn in die Hohlräume zwischen Schubübertragungskörper und Deckscheiben schalldämmende Blöcke, z. B. Blöcke aus geschlossenporigem Schaumstoff, eingesetzt und mit Schubübertragungskörper sowie der jeweiligen Deckscheibe verklebt werden.

Weitere Ausgestaltungen der Erfindung gehen aus den Unteransprüchen hervor. Die Erfindung ist in einem Ausführungsbeispiel anhand der Zeichnung näher erläutert. In der Zeichnung stellen dar :

Figur 1 eine schematische Aufsicht auf ein Scheibenrad gemäß der Erfindung mit einer Nabe, einem Laufkranz, einem Schubübertragungskörper und teilweise weggebrochenen Deckscheiben ;

Figur 2 schematisch Axialschnitte durch den Schubübertragungskörper längs zur Radachse koaxialen Teilkreisen ;

Figur 3 schematisch eine perspektivische Ansicht eines schalenförmigen Segmentes aus faserverstärktem Werkstoff zur Herstellung des Schübertragungskörpers ;

Figuren 4-7 perspektivische Darstellungen bzw. in Figur 6 eine Schnittdarstellung eines Scheibenrades während der Herstellung in aufeinanderfolgenden Verfahrensschritten.

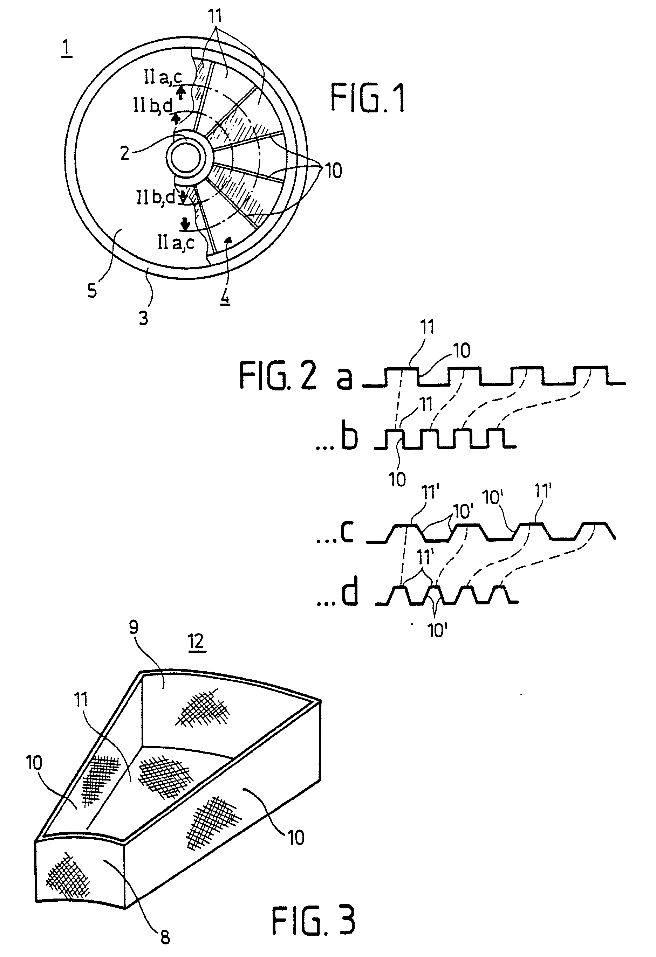

In Figur 1 ist schematisch ein Eisenbahnrad 1 mit einer einstückigen stählernen Nabe 2, einem ebenfalls einstückigen stählernen Laufkranz 3, einem Schubübertragungskörper 4 aus faserverstärktem Werkstoff und zwei Deckscheiben zu beiden Seiten des Rades ebenfalls aus faserverstärkten Werkstoffen gezeigt. An den beiden Außenrändern von Nabe 2 und Laufkranz 3 sind jeweils zwei umlaufende, im Querschitt dreieckige Flansche 6 bzw. 7 vorgesehen, wobei die Dreieckspitzen der jeweils gegenüberliegenden Flansche 6 bzw. 7 von Nabe 2 bzw. Laufkranz 3 einander zugewandt sind. Der Schubübertragungskörper 4 liegt an der Nabe 2 bzw. dem Laufkranz 3 mit Anlageflächen 8 bzw. 9 im Bereich zwischen den Flanschen 6 bzw. 7 an und ist dort, wie weiter unten erläutert, verklebt. Eine Bewegung des Schubübertragungskörpers 4 in axialer Richtung des Eisenbahnrades 1 wird dadurch ausgeschlossen. Die Deckscheiben 5 zu beiden Seiten des Eisenbahnrades 1 sind mit den jeweiligen Außenflächen der Flansche 6 und 7 an Nabe und Laufkranz verklebt, außerdem noch mit Teilen des Schubübertragungskörpers 4.

Der Schubübertragungskörper 4 ist ein Z-Stegkörper oder Sinus-Stegkörper, dessen Querschnitt entsprechend den geforderten Festigkeits- und Stabilitätseigenschaften mannigfach variiert werden kann. In Figur 1 sind zwei Axialschnitte längs zweier zur Radachse koaxialer Teilkreise mit unterschiedlichen Radien eingezeichnet. Der Querschnittsverlauf des Schubübertragungskörpers ist für zwei mögliche Ausführungsformen in den Figuren 2a und b bzw. 2c und d dargestellt. Im ersten Fall ist der Querschnitt rechteckig mäanderförmig, der Schubübertragungskörper weist in die Radachse enthaltenden Radialebenen stegförmige Seitenwände 10 auf, die durch stegförmige Böden 11 miteinander verbunden sind, welche abwechselnd auf entgegengesetzten Seiten des Rades liegen. Der Abstand zwischen aufeinanderfolgenden Seitenwänden 10 wird mit größerem Radius ebenfalls größer.

Bei dem Ausführungsbeispiel gemäß den Figuren 2c und 2d verlaufen die stegförmigen Seitenwände 10' in Sinusform ; die sinusförmigen Stege könne zu beiden Seiten des Rades abgeplattet sein und bilden hier stegförmige Böden 11'. Der Abstand zwischen zwei aufeinanderfolgenden Seitenwänden wird auch bei diesem Ausführungsbeispiel mit zunehmendem Radius größer.

Der weiteren Beschreibung wird ein Schubübertragungskörper 4 zugrunde gelegt, dessen Querschnitt gemäß den Figuren 2a und 2b verläuft. Der Schubübertragungskörper selbst ist aus mehreren Segmenten entsprechend Figur 3 zusammengesetzt. Jedes Segment ist schalenförmig, weist zwei in radialer Richtung verlaufende Seitenwände 10, als weitere Seitenflächen die der Nabe 2 zugeordnete Anlagefläche 8 und die dem Laufkranz 3 zugeordnete Anlagefläche 9 sowie einen Boden 11 auf. Dieses Segment wird aus faserverstärkten Werkstoffen in herkömmlicher Weise hergestellt. Optimale Festigkeit könnte erzielt werden, wenn ein Gewebe mit zwei Fadensystemen benutzt würde, deren Fäden senkrecht aufeinander stehen und wobei die Fäden in den einzelnen Flächen des Segmentes jeweils einen Verlauf von ± 45 Grad gegen die Hauptrichtung einnehmen würden, d. h. in inerhalb der Seitenwände 10 und des Bodens gegenüber der Radialrichtung, innerhalb der Anlageflächen 8 und 9 gegenüber der Umfangsrichtung. In der Praxis ist dieses nur schwierig zu realisieren. Eine sehr einfache Herstellungsweise besteht darin, daß eine Art Gewerbeschlauch über eine Kastenform gezogen und entsprechend mit Bindemittel versehen wird. Auch dieses Verfahren ist bekannt. Bei diesem Verfahren werden die einzelnen Wände des Segmentes zwar geringfügig dicker, wenn die gleiche Festigkeit wie bei dem obigen Fall erzielt werden soll ; dies wird jedoch aufgewogen durch die wesentlich wirtschaftlichere Herstellung.

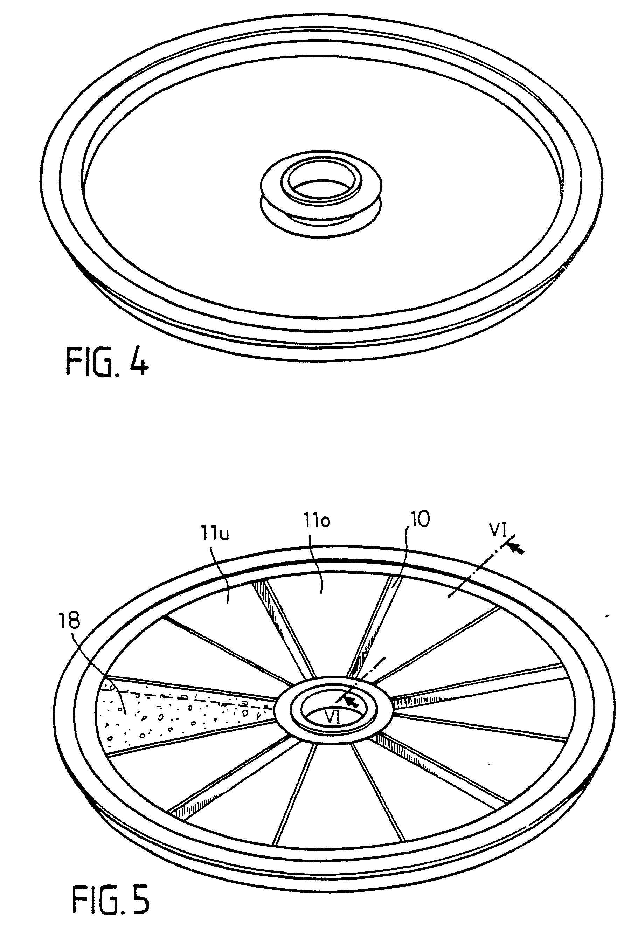

Das Herstellungsverfahren eines Scheibenrades wird anhand der Figuren 4ff erläutert.

Zunächst werden auf einem nicht dargestellten Montagetisch die Nabe 2 und der Laufkranz 3 ausgerichtet.

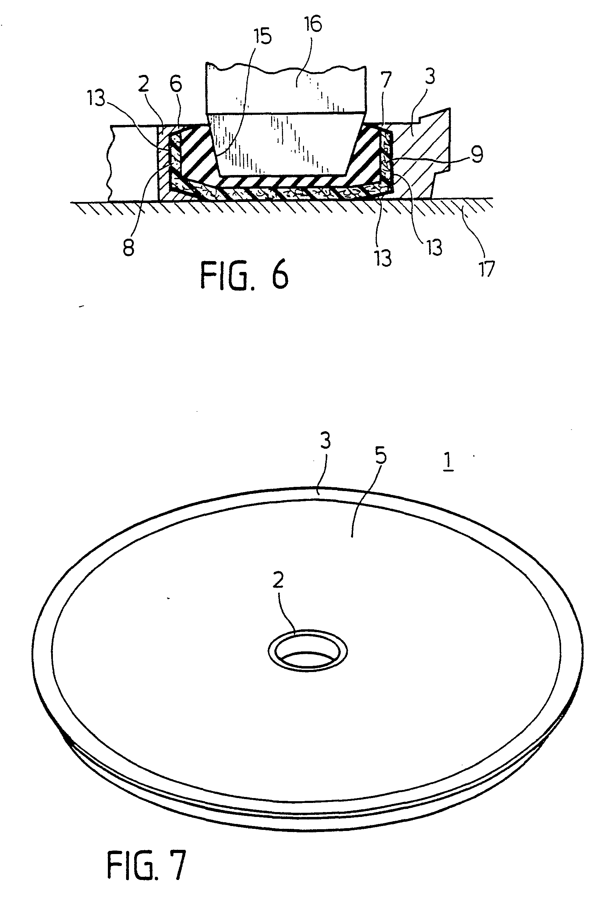

Anschließend werden die Segmente 12 zwischen die Flansche 6 und 7 an Nabe bzw. Laufkranz eingesetzt. Dieses ist möglich, solange das Bindemittel noch nicht ausgehärtet ist und damit die Segmente noch verformbar sind. Die Segmente werden gemäß Figur 5 so eingesetzt, daß die Böden 11 der lückenlos aneinanderschließenden Segmente abwechselnd auf entgegengesetzten Seiten des Rades liegen ; in Figur 5 sind die nach oben zeigenden Böden mit 11o, die nach unten weisenden Böden mit 11u bezeichnet. In Figur 6 ist die Lage eines Segmentes zwischen Nabe 2 und Laufkranz 3 im Schnitt dargestellt.

Um die Verklebung zwischen Nabe und Laufkranz einerseits und den Segmenten andererseits zu gewährleisten, sind Nabe und Laufkranz sowie die Innenseiten der jeweiligen Flansche 6 bzw. 7 wie oben erwähnt entsprechend vorbehandelt, z. B. mit einer Klebefolie versehen oder sandgestrahlt und mit einem Primer gestrichen. Angedeutet ist dies in Figur 6 durch die Schicht 13.

In den Hohlraum jedes der eingedeckten Segmente 12 wird jetzt ein entsprechend der endgültigen Segmentform vorgeformter elastischer Stempel 14, z. B. aus Silikon eingesetzt. Dieser Stempel hat eine zentrische kegelstumpfförmige Ausnehmung 15. In diese Ausnehmung wird ein Stahlstempel 16 eingesetzt, dessen unterer Rand formmäßig an die Ausnehmung 15 angepaßt ist. Durch das Einpressen des Stahlstempels 16 in die Ausnehmung 15 wird über den Silikonstempel 14 jedes Segment an den Seitenwänden und am Boden an die jeweilige Gegenfläche gepreßt. Im Bereich der Anlageflächen 8 und 9 sind dieses die Nabe bzw. der Laufkranz im Bereich zwischen den Flanschen, im Bereich des Bodens 11 sind dieses die Innenränder der Flansche 6 und 7 und der hier schematisch dargestellte Montagetisch 17, im Bereich der Seitenwände 10 sind dies ebenfalls Seitenwände 10 des jeweils benachbarten Segmentes.

Unter Aufrechterhaltung des Preßdruckes wird eine Wärmebehandlung vorgenommen, z. B. bei 120 Grad eine halbe Stunde. Während dieser Temperung wird das Bindemittel der Segmente vergleichmäßigt, vernetzt und kann Verbindungen zu den jeweiligen Gegenflächen herstellen. Der Montagetisch 17 ist selbstverständlich so präpariert, daß er nicht mit dem Boden 11 der Segmente verklebt.

Nach der Temperung kühlt die Anordnung ab. Der Preßdruck wird bis zur Aushärtung des faserverstärkten Werkstoffes beibehalten. Danach sind alle Segmente 12 untereinander und mit Nabe und Laufkranz verklebt.

Anschließend werden die beiden Deckscheiben 5 mit den Außenflächen der Flansche 6 und 7 und jeweils den ihnen zugewandten Böden 11 der Segmente 12 verklebt. Auch dies kann mit Hilfe eines Folienklebers erfolgen. Das fertige Eisenbahnrad 1 ist in Figur 7 dargestellt.

Bei dem fertigen Eisenbahnrad werden die Radialkräfte über die stegförmigen Seitenwände 10 und die Böden 11 aufgenommen, die axialen Kräfte, die z. B. beim Weichenüberfahren oder in Kurven auftreten, ebenfalls über die Seitenwände 10 und die Anlageflächen 8 und 9, schließlich die tangentialen Bremskräfte über die Anlageflächen 8 und 9 sowie die Böden 11. Ein Teil dieser Kräfte wird selbstverständlich auch über die Deckscheiben 5 aufgefangen.

In die Hohlräume der Segmente 12 können noch schalldämmende Blöcke 18, z. B. aus geschlossenporigem Schaumstoff eingesetzt werden. Diese werden mit den Segmenten 12 und den Deckscheiben 5 verklebt.

## Patentansprüche

1. Scheibenrad, insbesondere für Schienenfahrzeuge, mit einer Nabe und einem Laufkranz sowie einem Schubübertragungskörper aus faserverstärkten Werkstoffen zwischen Nabe und Laufkranz und zwei Deckscheiben auf entgegengesetzten Seiten des Rades, die sich jeweils zwischen Nabe und Laufkranz erstrecken, den Schubübertragungskörper überdecken und mit Nabe, Laufkranz und Schubübertragungskörper verklebt sind, dadurch gekennzeichnet, daß Nabe (2) und Laufkranz (3) jeweils an ihren Außenrändern zwei umlaufende, im wesentlichen radial gerichtete Flansche (6, 7) aufweisen, daß der Schubübertragungskörper (4) als Z-Stegkörper ausgebildet ist, dessen Verlauf in einem beliebigen Axialschnitt längs eines zum Scheibenrad (1) koaxialen Teilkreises zwischen Nabe (2) und Laufkranz (3) regelmäßig mäanderförmig mit in radialer Richtung stetig zunehmender Mäandermusterlänge ist und der mit Anlageflächen (8, 9) für Nabe (2) und Laufkranz (3) versehen ist, die auf Nabe (2) und Laufkranz (3) jeweils im Bereich zwischen den Flanschen (6, 7) an diesen anliegen und dort verklebt sind, und daß der Schubübertragungskörper (4) längs seiner den Deckscheiben (5) zugewandten Stege (11) mit den Deckscheiben (5) verklebt ist, die ihrerseits noch mit den Außenrändern der Flansche (6, 7) an Nabe (2) und Laufkranz (3) verklebt sind.

2. Scheibenrad nach Anspruch 1, dadurch gekennzeichnet, daß Nabe (2) und Laufkranz (3) einschließlich ihrer Flansche (6, 7) jeweils einstückig sind.

3. Scheibenrad nach Anspruch 1 oder 2, dadurch gekennzeichnet, daß der Schubübertragungskörper (4) aus mehreren, in Umfangsrichtung des Scheibenrades (1) lückenlos aneinander schließenden gleichgeformten schalenförmigen Segmenten (12) besteht, die jeweils mit ihren radial innen- bzw. außen liegenden Seitenwänden (Anlageflächen 8, 9) an der Nabe (2) bzw. dem Laufkranz (3) im Bereich zwischen den dortigen Flanschen (6, 7) und mit ihren sich zwischen Nabe (2) und Laufkranz (3) erstreckenden Seitenwänden (10) an Seitenwänden jeweils benachbarter Segmente (12) anliegen und mit diesen verklebt sinf, und daß die Schalenböden (11) jeweils aufeinanderfolgender Segmente (12) auf entgegengesetzten Seiten des Scheibenrades (1) liegen.

4. Scheibenrad nach Anspruch 3, dadurch gekennzeichnet, daß die Böden (11) der Segmente (12) jeweils mit den Deckscheiben (5) verklebt sind.

5. Scheibenrad nach einem der vorhergehenden Ansprüche, dadurch gekennzeichnet, daß die Flansche (6, 7) an Nabe (2) und Laufkranz (3) einen Dreiecksquerschnitt aufweisen, und daß mit der jeweiligen Innenfläche der Flansche (6, 7) der Schubübertragungskörper (4) und mit der jeweiligen Außenfläche eine Deckscheibe (5) verklebt ist, so daß sich jeweils eine zweischnittige Verbindung ergibt.

6. Scheibenrad nach einem der vorhergehenden Ansprüch, dadurch gekennzeichnet, daß in die Hohlräume des Schubübertragungskörpers (4) Schalldämpfungsteile (18), vorzugsweise aus Schaumstoff eingesetzt sind.

7. Verfahren zum Herstellen eines Scheibenrades, das eine Nabe, einen Laufkranz, einen zwischen diesen sich erstreckenden Schubübertragungskörper aus faserverstärkten Werkstoffen und zwei Deckscheiben auf entgegengesetzten Seiten des Scheibenrades aufweist, die sich zwischen Nabe und Laufkranz erstrecken und mit diesen sowie dem Schubübertragungskörper verklebt sind, gekennzeichnet durch folgende Merkmale :

a) es werden eine Nabe (2) und ein Laufkranz (3) jeweils mit zwei an ihren äußeren Rändern umlaufenden Flanschen (6, 7) bereitgestellt und konzentrisch zueinander ausgerichtet ;

b) der Schubübertragungskörper (4) wird aus faserverstärkten Werkstoffen hergestellt und mit Anlageflächen (8, 9) für Nabe 2 und Laufkranz (3) ausgebildet und anschließend in noch nicht ausgehärtetem Zustand durch Verformung zwischen Nabe (2) und Laufkranz (3) eingelegt, so daß die Anlageflächen (8, 9) des Schubübertragungskörpers (4) jeweils zwischen den Flanschen (6, 7) an Nabe (2) und Laufkranz (3) anliegen ;

c) in die Hohlräume des Schubübertragungskörpers (4) werden zu beiden Seiten des Scheibenrades (1) entsprechend der endgültigen Form des Schubübertragungskörpers (4) vorgeformte, jedoch elastisch verformbare Stempel (14) eingesetzt ;

d) diese Stempel (14) werden durch Druck (Stahlstempel 16) in die endgültige Form gebracht ;

e) unter Beibehaltung des Druckes wird der Schubübertragungskörper (4) ausgehärtet ;

f) nach Entfernen der Stempel (14, 16) werden Deckscheiben (5) aufgeklebt und mit Nabe (2), Laufkranz (3) sowie dem Schubübertragungskörper (4) zu beiden Seiten des Scheibenrades (1) verklebt.

8. Verfahren nach Anspruch 7, dadurch gekennzeichnet, daß nach dem Verfahrensschritt a) die Schritte b) bis d) ersetzt werden durch :

b1) es werden aus faserverstärkten Werkstoffen mehrere gleichgeformte schalenförmige Segmente (12) hergestellt, die auf gegenüberliegenden Seiten Anlageflächen (8, 9) für die Nabe (2) und den Laufkranz (3) aufweisen und eine dem Abstand zwischen den Flanschen (6, 7) an Nabe (2) bzw. Laufkranz (3) entsprechende Breite, zwei die Anlageflächen (8, 9) verbindende ebene Seitenwände (10) und einen Schalenboden (11) aufweisen ;

b2) die noch nicht ausgehärteten Segmente (12) werden durch Verformen zwischen Nabe (2) und Laufkranz (3) eingelegt derart, daß die Schalenböden (11) jeweils aufeinander folgender Segmente (12) auf entgegengesetzten Seiten des Scheibenrades (1) liegen ;

c') in die Hohlräume der Segmente (12) werden zu beiden Seiten des Scheibenrades (1) entsprechend der endgültigen Schalenform der Segmente (12) vorgeformte, jedoch elastisch verformbare Stempel (14) eingesetzt ;

d') diese Stempel (14) werden durch Druck in die endgültige Form gebracht, wobei die Seitenwände (10) benachbarter Segmente (12) aneinander und die Anlageflächen (8, 9) aller Segmente (12) an Nabe (2) und Laufkranz (3) gepreßt werden und wobei die Segmente (12) zur Bildung des Schubübertragungskörpers (4) in Umfangsrichtung des Scheibenrades lückenlos aneinanderliegen.

9. Verfahren nach Anspruch 7 oder 8, dadurch gekennzeichnet, daß zwischen den Verfahrensschritten a) und b) bzw. a) und b1) die Nabe (2) und der Laufkranz (3) zwischen den Flanschen (6, 7) und die Innenseiten der Flansche (6, 7) zur Verbindung mit dem Bindemittel des faserverstärkten Werkstoffes des Schubübertragungskörpers (4) vorbehandelt werden.

10. Verfahren nach Anspruch 9, dadurch gekennzeichnet, daß auf die Flansche (6, 7) sowie die Nabe (2) und den Laufkranz (3) im Bereich zwischen den Flanschen (6, 7) eine Klebefolie (13) aufgebracht wird.

11. Verfahren nach Anspruch 9, dadurch gekennzeichnet, daß die vorzubehandelnden Flächen aufgerauht und mit einem Voranstrich (13) zur Verklebung mit dem Bindemittel des verstärkten Werkstoffes des Schubübertragungskörpers (4) versehen werden.

12. Verfahren nach einem der vorhergehenden Ansprüche 7 bis 11, dadurch gekennzeichnet, daß der Schubübertragungskörper (4) bei dem Verfahrensschritt e) zusätzlich wärmebehandelt wird.

13. Verfahren nach Anspruch 12, dadurch gekennzeichnet, daß die Wärmebehandlung bei annähernd konstanter Temperatur über eine zu einer Temperung ausreichende Zeit erfolgt.

14. Verfahren nach Anspruch 13, dadurch gekennzeichnet, daß die Temperung bei etwa 120 °C vorgenommen wird.


**Claims**

1. A disc wheel, more especially for rail vehicles, having a hub and a tread as well as a tractive force transmission body made of fibre-reinforced materials between the hub and the tread and two cover discs on opposite sides of the wheel, which in each case extend between the hub and the tread, cover the tractive force transmission body and are bonded with the hub, the tread and the tractive force transmission body, characterised in that the hub (2) and the tread (3) in each case have at their outer edges two encircling, substantially radially directed flanges (6, 7), in that the tractive force transmission body (4) is designed as a Z-web body, the course of which in an arbitrary axial section along a partial circle, coaxial to the disc wheel (1), between the hub (2) and the tread (3) is uniformly meander-shaped with a meander pattern length steadily increasing in the radial direction and which is provided with abutment surfaces (8, 9) for the hub (2) and the tread (3), which on the hub (2) and the tread (3) in each case in the region between the flanges (6, 7) butt against these and are bonded there, and in that the tractive force transmission body (4) along its webs (11) facing the cover discs (5) is bonded with the cover discs, which are for their part additionally bonded to the outer edges of the flanges (6, 7) on the hub (2) and the tread (3).

2. A disc wheel according to claim 1, characterised in that the hub (2) and the tread (3) including their flanges (6, 7) are in each case in one piece.

3. A disc wheel according to claim 1 or 2, characterised in that the tractive force transmission body (4) consists of several identically shaped dished segments (12) which adjoin one another in a gapless manner in the circumferential direction of the disc wheel (1) and which in each case butt with their radially inwardly or respectively outwardly lying side walls abutment surfaces (8, 9) against the hub (2) or respectively the tread (3) in the region between the flanges (6, 7) there and, with their side walls (10), extending between the hub (2) and the tread (3), butt against side walls of respectively adjacent segments (12) and are bonded with these, and in that the dish bases (11) of respectively consecutive segments (12) lie on opposite sides of the disc wheel (1).

4. A disc wheel according to claim 3, characterised in that the bases (11) of the segments (12) are in each case bonded with the cover discs (5).

5. A disc wheel according to one of the preceding claims, characterised in that the flanges (6, 7) on the hub (2) and the tread (3) have a triangular cross-section, and in that a cover disc (5) is bonded with the respective inner surface of the flanges (6, 7) of the tractive force transmission body (4) and with the respective outer surface, so that in each case a double-shearing connection results.

6. A disc wheel according to one of the preceding claims, characterised in that sound-deadening parts (18), preferably made of foam material, are inserted into the cavities of the tractive force transmission body (4).

7. A method of producing a disc wheel which has a hub, a tread, a tractive force transmission body made of fibre-reinforced materials extending between these and two cover discs on opposite sides of the disc wheel, which extend between the hub and the tread and are bonded with these as well as the tractive force transmission body, characterised by the following features :

a) a hub (2) and a tread (3) are prepared and aligned concentrically with one another each having two flanges (6, 7) encircling their outer edges ;

b) the tractive force transmission body (4) is produced from fibre-reinforced materials and designed with abutment surfaces (8, 9) for the hub (2) and the tread (3) and are then inserted in the not yet hardened state by deformation between the hub (2) and the tread (3), so that the abutment surfaces (8, 9) of the tractive force transmission body (4) in each case butt, between the flanges (6, 7), against the hub (2) and the tread (3) ;

c) on both sides of the disc wheel (1) plungers (14) which are preshaped in accordance with the final shape of the tractive force transmission body (4), but which are elastically deformable, are inserted into the cavities of the thrust transmission body (4) ;

d) these plungers (14) are brought into the final shape by pressure steel punches (16) ;

e) the tractive force transmission body (4) is hardened whilst maintaining the pressure ;

f) after removal of the plungers (14, 16) cover discs (5) are bonded on and are bonded with the hub (2), the tread (3) as well as the tractive force transmission body (4) to both sides of the disc wheel (1).

8. A method according to claim 7, characterised in that, after the method step a), the steps b) to d) are replaced by :

b1) from fibre-reinforced materials several identically shaped dished segments (12) are produced, which have on opposite sides abutment surfaces (8, 9) for the hub (2) and the tread (3) and have a width corresponding to the distance between the flanges (6, 7) on the hub (2) or respectively the tread (3), two flat side walls (10) connecting the abutment surfaces (8, 9) and a dish base (11) ;

b2) the not yet hardened segments (12) are inserted by deformation between the hub (2) and the tread (3) in such a way that the dish bases (11) of respectively consecutive segments (12) lie on opposite sides of the disc wheel (1) ;

c') on both sides of the disc wheel (1) plungers (14) which are preshaped in accordance with the final dish shape of the segments (12), but which are elastically deformable, are inserted into the cavities of the segments (12) ;

d') these plungers (14) are brought by pressure into the final shape, in which respect the side walls (10) of adjacent segments (12) are pressed against one another and the abutment surfaces (8, 9) of all the segments (12) are pressed against the hub (2) and the tread (3) and in which respect the segments (12) for the formation of the tractive force transmission body (4) are juxtaposed in a gapless manner in the circumferential direction of the disc wheel.

9. A method according to claim 7 or 8, characterised in that, between the method steps a) and b) or respectively a) and b1), the hub (2) and the tread (3) between the flanges (6, 7) and the insides of the flanges (6, 7) are pretreated for the connection to the binding agent of the fibre-reinforced material of the tractive force transmission body (4).

10. A method according to claim 9, characterised in that an adhesive foil (13) is applied to the flanges (6, 7) as well as the hub (2) and the tread (3) in the region between the flanges (6, 7).

11. A method according to claim 9, characterised in that the surfaces to be pretreated are roughened and are provided with an undercoating (13) for the bonding with the binding agent of the reinforced material of the tractive force transmission body (4).

12. A method according to one of the preceding claims 7 to 11, characterised in that the tractive force transmission body (4) is additionally heat-treated during the method step e).

13. A method according to claim 12, characterised in that the heat treatment is effected at approximately constant temperature over a time sufficient for annealing.

14. A method according to claim 13, characterised in that the annealing is undertaken at about 120 °C.

**Revendications**

1. Roue pleine, notamment pour des véhicules sur rails, comprenant un moyeu et un bandage de roue ainsi qu'un corps de transmission de poussée en matériaux renforcés par fibres entre le moyeu et le bandage de roue et deux disques de recouvrement sur des faces opposées de la roue, qui s'étendent chacun entre le moyeu et le bandage de roue, recouvrent le corps de transmission de poussée et sont collés au moyeu, au bandage de roue et au corps de transmission de poussée, caractérisée par le fait que le moyeu (2) et le bandage de roue (3) présentent chacun à leurs bords extérieurs deux rebords (6, 7) périphériques orientés sensiblement radialement, que le corps de transmission de poussée (4) est réalisé comme corps à entretoises en Z qui, dans une coupe axiale quelconque le long d'un cercle coaxial à la roue pleine (1), entre le moyeu (2) et le bandage de roue (3), présente un motif en méandres réguliers avec une longueur du motif en méandres augmentant de façon continue dans le sens radial, et qui est pourvu de surfaces d'appui (8, 9) pour le moyeu (2) et le bandage de roue (3), qui sont appliquées contre le moyeu (2) et le bandage de roue (3) dans la zone entre les rebords (6, 7) et collées dans cette zone, et que le corps de transmission de poussée (4) est collé, le long de ses entretoises (11) tournées vers les disques de recouvrement (5), aux disques de recouvrement (5) qui sont collés à leur tour aux bords extérieurs des rebords (6, 7) du moyeu (2) et du bandage de roue (3).

2. Roue pleine selon la revendication 1, caractérisée par le fait que le moyeu (2) et le bandage de roue (3), y compris leurs rebords (6, 7), sont chacun réalisés d'une seule pièce.

3. Roue pleine selon la revendication 1 ou 2, caractérisée par le fait que le corps de transmission de poussée (4) se compose de plusieurs segments (12) identiques en forme de coques qui se suivent sans intervalles dans le sens périphérique de la roue pleine (1) et sont appliqués par leurs parois latérales (surfaces d'appui 8, 9), se trouvant respectivement radialement à l'intérieur et à l'extérieur, chacun contre le moyeu (2) et le bandage de roue (3) dans la zone entre les rebords (6, 7) de ceux-ci, et par leurs parois latérales (10), s'étendant entre le moyeu (2) et le bandage de roue (3), contre les parois latérales de segments (12) adjacents et sont collés à ceux-ci, et que les fonds de coque (11) de segments (12) successifs se trouvent sur des faces opposées de la roue pleine (1).

4. Roue pleine selon la revendication 3, caractérisée par le fait que les fonds (11) des segments (12) sont chacun collés aux disques de recouvrement (5).

5. Roue pleine selon l'une des revendications précédentes, caractérisée par le fait que les rebords (6, 7) du moyeu (2) et du bandage de roue (3) présentent une section en triangle, et qu'à la face intérieure correspondante des rebords (6, 7) est collé le corps de transmission de poussée (4) et à la face extérieure correspondante un disque de recouvrement (5), de manière à former une liaison à double cisaillement.

6. Roue pleine selon l'une des revendications précédentes, caractérisée par le fait que dans les cavités du corps de transmission de poussée (4) sont insérés des éléments insonorisants (18), de préférence en matière alvéolaire.

7. Procédé pour la fabrication d'une roue pleine comprenant un moyeu, un bandage de roue, un corps de transmission de poussée en matériaux renforcés par fibres entre le moyeu et le bandage de roue, et deux disques de recouvrement sur des faces opposées de la roue pleine, qui s'étendent entre le moyeu et le bandage de roue et sont collés à ceux-ci ainsi qu'au corps de transmission de poussée, caractérisé par le fait que :

a) un moyeu (2) et un bandage de roue (3) ayant chacun deux rebords (6, 7) périphériques à leurs bords extérieurs sont disposés de manière concentrique l'un par rapport à l'autre ;

b) le corps de transmission de poussée (4) est fabriqué à partir de matériaux renforcés par fibres et réalisé avec des surfaces d'appui (8, 9) pour le moyeu (2) et le bandage de roue (3) et inséré ensuite, à l'état pas encore durci, par déformation entre le moyeu (2) et le bandage de roue (3), de sorte que les surfaces d'appui (8, 9) du corps de transmission de poussée (4) soient appliquées entre les rebords (6, 7) respectivement contre le moyeu (2) et le bandage de roue (3) ;

c) dans les cavités du corps de transmission de poussée (4) sont insérés sur les deux faces de la roue pleine (1), en fonction de la forme définitive du corps de transmission de poussée (4), des poinçons (14) préformés mais élastiquement déformables ;

d) ces poinçons (14) reçoivent leur forme définitive par l'application d'une pression (poinçons en acier 16) ;

e) le corps de transmission de poussée (4) est durci en maintenant la pression ;

f) après le retrait des poinçons (14, 16), des disques de recouvrement (5) sont appliqués par collage et colles, sur les deux faces de la roue pleine (1), au moyeu (2), au bandage de roue (3) et au corps de transmission de poussée (4).

8. Procédé selon la revendication 7, caractérisé par le fait qu'après l'étape de procédé a), les étapes b) à d) sont remplacées par les étapes :

b1) à partir de matériaux renforcés par fibres, on fabrique plusieurs segments (12) identiques en forme de coques, qui possèdent sur des côtés opposés des surfaces d'appui (8, 9) pour le moyeu (2) et le bandage de roue (3) et présentent une largeur correspondant à la distance entre les rebords (6, 7) du moyeu (2) et du bandage de roue (3), deux parois latérales (10) planes reliant les surfaces d'appui (8, 9) et un long de coque (11) ;

b2) les segments (12) pas encore durcis sont insérés par déformation entre le moyeu (2) et le bandage de roue (3) de telle manière que les fonds de coque (11) de segments (12) successifs se trouvent sur des faces opposées de la roue pleine (1) ;

c') dans les cavités des segments (12) sont insérés sur les deux faces de la roue pleine (1), en fonction de la forme de coque définitive des segments (12), des poinçons (14) préformés mais élastiquement déformables ;

d') ces poinçons (14) reçoivent leur forme définitive par l'application d'une pression, les parois latérales (10) des segments (12) adjacents étant pressées les unes contre les autres et les surfaces d'appui (8, 9) de tous les segments (12) étant pressées contre le moyeu (2) et le bandage de roue (3) et les segments (12) étant appliqués les uns contre les autres sans intervalles dans le sens périphérique de la roue pleine (1) pour former le corps de transmission de poussée (4).

9. Procédé selon la revendication 7 ou 8, caractérisé par le fait qu'entre les étapes de procédé a) et b) ou a) et b1), le moyeu (2) et le bandage de roue (3), entre les rebords et les faces intérieures des rebords (6, 7), sont prétraités en vue de la liaison avec le liant du matériau renforcé par fibres du corps de transmission de poussée.

10. Procédé selon la revendication 9, caractérisé par le fait qu'une feuille de collage (13) est appliquée sur les rebords (6, 7) ainsi que sur le moyeu (2) et le bandage de roue (3) dans la zone entre les rebords (6, 7).

11. Procédé selon la revendication 9, caractérisé par le fait que les surfaces devant être prétraitées sont rendues rugueuses et pourvues d'une couche d'apprêt (13) pour le collage avec le liant du matériau renforcé du corps de transmission de poussée (4).

12. Procédé selon l'une des revendications 7 à 11, caractérisé par le fait que dans l'étape de procédé e), le corps de transmission de poussée (4) est soumis en plus à un traitement thermique.

13. Procédé selon la revendication 12, caractérisé par le fait que le traitement thermique est effectué à une température approximativement constante pendant un temps suffisamment long pour un chauffage à cœur ou recuit.

14. Procédé selon la revendication 13, caractérisé par le fait que le recuit est effectué à environ 120 °C.

FIG.1

FIG. 2 a

...b

...c

...d

FIG. 3

FIG. 4

FIG. 5

FIG. 6

FIG. 7